# EUROPEAN PATENT APPLICATION

(11) **EP 4 553 476 A1**
(43) Date of publication of application: **14.05.2025**
(21) Application number: 24208155.2
(22) Date of filing: 22.10.2024
(51) Int. Cl.: G01M 11/00

(54) **OPTICAL TIME-DOMAIN REFLECTOMETER AND PROGRAM**

(30) Priority: 10.11.2023 JP 2023192424
(71) Applicant: Yokogawa Electric Corporation, Tokyo 180-8750 (JP); Yokogawa Test & Measurement Corporation, Hachioji-shi, Tokyo 192-8566 (JP)
(72) Inventor: SO, Yoshihisa, Hachioji-shi, Tokyo, 192-8566 (JP)
(74) Representative: Stöckeler, Ferdinand

(57) **Abstract**

Waveform analysis of optical power measured by an optical time-domain reflectometer is further facilitated. A program is configured to cause a computer to operate as an information processing apparatus (10) including a controller (11) configured to acquire a waveform representing a temporal variation of returned light of pulsed light incident on an optical fiber, detect, based on the waveform, an event in the optical fiber, and cause the waveform and a pattern indicating the detected event to be displayed on a display (15). The controller (11) is configured to cause, as the pattern, an image including an indication of a travel direction of the pulsed light to be displayed on the display (15).

## Description

### CROSS-REFERENCE TO RELATED APPLICATION

This application claims priority to Japanese Patent Application No. 2023-192424 filed on November 10, 2023, the entire contents of which are incorporated herein by reference.

### TECHNICAL FIELD

The present disclosure relates to an optical time-domain reflectometer and a program.

### BACKGROUND

Optical fibers are optical waveguides for propagating light and are widely used as communication lines for data transmission using optical signals. Communication networks using the optical fibers are one of important communication infrastructures that support the Internet. Therefore, maintenance of the laid optical fibers is very important, and various evaluations have been conducted on the optical fibers. Evaluation items on the optical fibers include, for example, the distance of the optical fiber, a transmission loss in the optical fiber, a loss at a splice point between the optical fibers, and the like.

Optical time-domain reflectometers (OTDRs) are known as technology for measuring the characteristics of the optical fibers. The optical time-domain reflectometer has pulsed light incident from one end of an optical fiber to be measured, and measures the power of returned light, such as backscattered light and Fresnel reflection, in the time domain, to display and analyze the measured optical power.

The optical time-domain reflectometer generally outputs a waveform of the optical power of the returned light, with the optical power of the returned light as a vertical axis and distance calculated from the time difference between incidence of the pulsed light and return of the returned light as a horizontal axis. When events, such as fusion points, connector splice points, branch points, bent points, and cut points, exist in the optical fiber to be measured, the waveform of the optical power of the returned light exhibits characteristic shapes according to the types of events at the positions of such events. Therefore, in analyzing the waveform of the optical power of the returned light, the positions of cuts, connector splices, fusion defects, and the like in the optical fiber can be identified by detecting these characteristic shapes and measuring the positions thereof.

Patent Literatures (PTLs) 1 and 2 describe technology for detecting and displaying events based on a waveform of optical power measured by an optical time-domain reflectometer.

### CITATION LIST

### Patent Literatures

PTL 1: JP 2016-053542 A
PTL 2: JP H11-326126 A

### SUMMARY

However, conventional configurations have room for improvement in terms of displaying detected events in an easy-to-understand manner, in order to facilitate waveform analysis of optical power. In particular, the conventional configurations have room for improvement in terms of further facilitate bidirectional analysis, in which pulsed light is incident in forward and backward directions on an optical fiber to be measured and waveforms of returned light measured in each direction are matched to analyze events.

It would be helpful to further facilitate waveform analysis of optical power measured by an optical time-domain reflectometer.
(1) A program according to some embodiments is configured to cause a computer to operate as an information processing apparatus including a controller configured to:
   acquire a waveform representing a temporal variation of returned light of pulsed light incident on an optical fiber;
   detect, based on the waveform, an event in the optical fiber; and
   cause the waveform and a pattern indicating the detected event to be displayed on a display,
   wherein the controller is configured to cause, as the pattern, an image including an indication of a travel direction of the pulsed light to be displayed on the display.

Thus, the controller of the computer, which operates based on the program, causes the waveform representing the temporal variation of the returned light of the pulsed light incident on the optical fiber and the pattern indicating the event detected based on the waveform to be displayed on the display. Here, the controller causes, as the pattern indicating the event, the image including the indication of the travel direction of the pulsed light to be displayed on the display. Therefore, a user can easily conduct waveform analysis of optical power while easily checking not only the existence of the event but also the travel direction of the pulsed light.

In one embodiment,
(2) in the program according to (1), the controller may be configured to:
acquire a first waveform representing a temporal variation of returned light of pulsed light incident in a first direction on the optical fiber;
acquire a second waveform representing a temporal variation of returned light of pulsed light incident in a second direction on the optical fiber;
detect, based on the first waveform, one or more first events that are events in the optical fiber;
detect, based on the second waveform, one or more second events that are events in the optical fiber;
associate a first event detected and a second event detected at the same position as the first event with each other; and
cause the first waveform, the second waveform, a pattern indicating the first and second events associated with each other, a pattern indicating a first event that is not associated with any second event, and a pattern indicating a second event that is not associated with any first event to be displayed on the display.

Thus, the controller of the computer, which operates based on the program, associates the first event detected and the second event detected at the same position as the first event with each other, and then causes the first waveform, the second waveform, the pattern indicating the first and second events associated with each other, the pattern indicating the first event that is not associated with any second event, and the pattern indicating the second event that is not associated with any first event to be displayed on the display. Therefore, the program can indicate the events by a minimum number of patterns required, which enables the user to easily conduct the waveform analysis of the optical power.

In one embodiment,
(3) in the program according to (2), the controller may be configured to cause, as the pattern indicating the first and second events associated with each other, an image including an indication of the first and second directions to be displayed on the display.

Therefore, according to the program, the single pattern can indicate that the event has been detected based on the waveforms of the returned light of the pulses light in both the first and second directions.

In one embodiment,
(4) in the program according to (2) or (3), the controller may be configured to:
cause, as the pattern indicating the first event that is not associated with any second event, an image including an indication of the first direction to be displayed on the display; and
cause, as the pattern indicating the second event that is not associated with any first event, an image including an indication of the second direction to be displayed on the display.

Therefore, according to the program, it is possible to indicate that the event has been detected based on only one waveform of the returned light of the pulses light in the first direction or the second direction.

In one embodiment,
(5) in the program according to (4), the controller may be configured to cause the image including the indication of the first direction and the image including the indication of the second direction to be highlighted and displayed on the display.

Thus, according to the program, when the event is detected based on only one waveform of the returned light of the pulses light in the first direction or the second direction, the image is highlighted. Therefore, the user can easily find the event that is detected based on the waveform in only one direction.

In one embodiment,
(6) in the program according to any one of (1) to (5), the controller may be configured to cause at least one of a physical quantity related to the event indicated by the pattern or the type of the event to be displayed in the vicinity of the pattern.

Thus, according to the program, the user can easily check not only the existence of the event and the travel direction of the pulsed light, but also the physical quantity related to the event and the type of the event.

(7) An optical time-domain reflectometer according to some embodiments is configured to have pulsed light incident on an optical fiber and measure a temporal variation of returned light, the optical time-domain reflectometer including a controller configured to:
acquire a waveform representing the temporal variation of the returned light;
detect, based on the waveform, an event in the optical fiber; and
cause the waveform and a pattern indicating the detected event to be displayed on a display,
wherein the controller is configured to cause, as the pattern, an image including an indication of a travel direction of the pulsed light to be displayed on the display.

Thus, the optical time-domain reflectometer causes the waveform representing the temporal variation of the returned light of the pulsed light incident on the optical fiber and the pattern indicating the event detected based on the waveform to be displayed on the display. Here, the optical time-domain reflectometer causes, as the pattern indicating the event, the image including the indication of the travel direction of the pulsed light to be displayed on the display. Therefore, a user can easily conduct waveform analysis of optical power while easily checking not only the existence of the event but also the travel direction of the pulsed light.

In one embodiment,
(8) in the optical time-domain reflectometer according to (7), the controller may be configured to:
acquire a first waveform representing a temporal variation of returned light of pulsed light incident in a first direction on the optical fiber;
acquire a second waveform representing a temporal variation of returned light of pulsed light incident in a second direction on the optical fiber;
detect, based on the first waveform, one or more first events that are events in the optical fiber;
detect, based on the second waveform, one or more second events that are events in the optical fiber;
associate a first event detected and a second event detected at a same position as the first event with each other; and
cause the first waveform, the second waveform, a pattern indicating the first and second events associated with each other, a pattern indicating a first event that is not associated with any second event, and a pattern indicating a second event that is not associated with any first event to be displayed on the display.

Thus, the optical time-domain reflectometer associates the first event detected and the second event detected at the same position as the first event with each other, and then causes the first waveform, the second waveform, the pattern indicating the first and second events associated with each other, the pattern indicating the first event that is not associated with any second event, and the pattern indicating the second event that is not associated with any first event to be displayed on the display. Therefore, the optical time-domain reflectometer can indicate the events by a minimum number of patterns required, which enables the user to easily conduct the waveform analysis of the optical power.

In one embodiment,
(9) in the optical time-domain reflectometer according to (8), the controller may be configured to cause, as the pattern indicating the first and second events associated with each other, an image including an indication of the first and second directions to be displayed on the display.

Therefore, according to the optical time-domain reflectometer, the single pattern can indicate that the event has been detected based on the waveforms of the returned light of the pulses light in both the first and second directions.

In one embodiment,
(10) in the optical time-domain reflectometer according to (8) or (9), the controller may be configured to:
cause, as the pattern indicating the first event that is not associated with any second event, an image including an indication of the first direction to be displayed on the display; and
cause, as the pattern indicating the second event that is not associated with any first event, an image including an indication of the second direction to be displayed on the display.

Therefore, according to the optical time-domain reflectometer, it is possible to indicate that the event has been detected based on only one waveform of the returned light of the pulses light in the first direction or the second direction.

In one embodiment,
(11) in the optical time-domain reflectometer according to (10), the controller may be configured to cause the image including the indication of the first direction and the image including the indication of the second direction to be highlighted and displayed on the display.

Thus, according to the optical time-domain reflectometer, when the event is detected based on only one waveform of the returned light of the pulses light in the first direction or the second direction, the image is highlighted. Therefore, the user can easily find the event that is detected based on the waveform in only one direction.

In one embodiment,
(12) in the optical time-domain reflectometer according to any one of (7) to (11), the controller may be configured to cause at least one of a physical quantity related to the event indicated by the pattern or the type of the event to be displayed in the vicinity of the pattern.

Therefore, according to the optical time-domain reflectometer, the user can easily check not only the existence of the event and the travel direction of the pulsed light, but also the physical quantity related to the event and the type of the event.

A program according to some embodiments is configured to cause an optical time-domain reflectometer to operate as the optical time-domain reflectometer according to any one of (7) to (12).

Therefore, a user can easily conduct waveform analysis of optical power while easily checking not only the existence of an event but also a travel direction of pulsed light.

According to an embodiment of the present disclosure, it is possible to further facilitate waveform analysis of optical power measured by an optical time-domain reflectometer.

### BRIEF DESCRIPTION OF THE DRAWINGS

In the accompanying drawings:
FIG. 1 is a diagram illustrating an example of displaying a waveform of returned light of pulsed light according to a comparative example;
FIG. 2 is a diagram illustrating an example of displaying a waveform of returned light of pulsed light according to the comparative example;
FIG. 3 is a diagram illustrating an example of displaying a waveform of returned light of pulsed light according to the comparative example;
FIG. 4 is a block diagram illustrating an example of a configuration of an information processing apparatus according to an embodiment;
FIG. 5A is a diagram illustrating an example of a pattern displayed in the embodiment;
FIG. 5B is a diagram illustrating an example of a pattern displayed in the embodiment;
FIG. 5C is a diagram illustrating an example of a pattern displayed in the embodiment;
FIG. 6 is a diagram illustrating an example of an image displayed on an output interface of FIG. 4;
FIG. 7 is a diagram illustrating an example of displaying a waveform of returned light of pulsed light according to the embodiment;
FIG. 8A is a flowchart illustrating an example of operations of the information processing apparatus according to the embodiment; and
FIG. 8B is a flowchart illustrating an example of a marking process of FIG. 8A.

### DETAILED DESCRIPTION

### <Comparative Example>

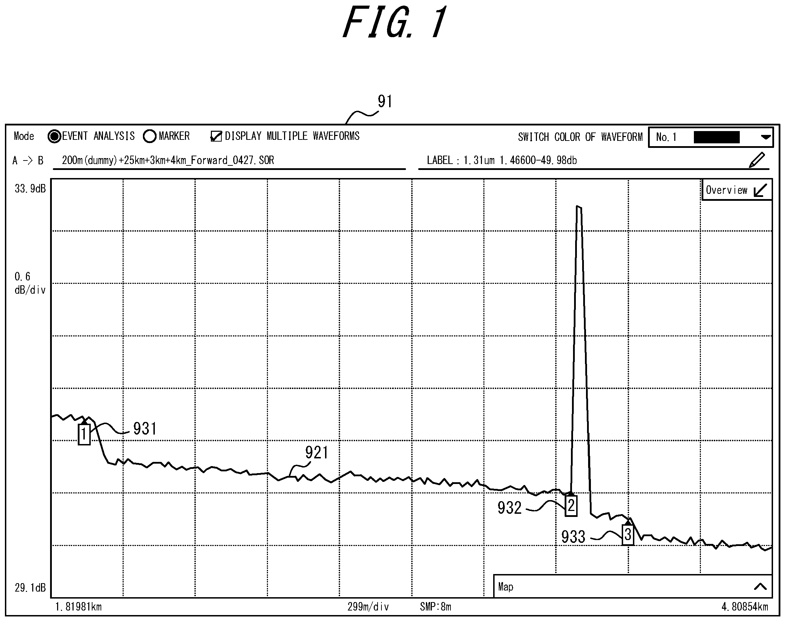

FIGS. 1 to 3 are diagrams illustrating examples of displaying waveforms of returned light of pulsed light according to a comparative example. In FIG. 1, an image 91 illustrates an area for displaying and analyzing a waveform measured by an optical time-domain reflectometer (OTDR).

A graph 921 represents a waveform of a temporal variation of optical power of returned light of pulsed light incident on an optical fiber. In FIG. 1, a horizontal axis indicates distance calculated from the time difference between incidence of the pulsed light and return of the returned light. A vertical axis indicates the magnitude of the optical power due to the returned light. When events, such as fusion points, connector splice points, branch points, bent points, and cut points, exist in the optical fiber, the waveform of the temporal variation of the returned light exhibits characteristic shapes according to the types of events.

In FIG. 1, patterns (icons, markers) 931 to 933 all indicate positions at which events have been detected. In FIG. 1, the optical power of the returned light is attenuated in the vicinity of the patterns 931 and 933. The characteristic shape of the graph 921 with the patterns 931 and 933 indicates the possibility of the existence of "fusion" at the positions indicated by the patterns 931 and 933. "Fusion" means that tips of two optical fibers are heated and bonded to each other. There is a peak of the optical power of the returned light in the vicinity of the pattern 932. The characteristic shape of the graph 921 with the pattern 932 indicates the existence of reflection of the pulsed light. Therefore, the characteristic shape of the graph 921 with the pattern 932 indicates the possibility of the existence of a splice point of two optical fibers at the position indicated by the pattern 932. In this way, displaying the patterns 931 to 933, which indicate detection of the events, in the vicinity of the waveform of the optical power in which the characteristic shapes are detected can visually exhibit the distribution of the events in an easy-to-understand manner.

When pulsed light is incident on an optical fiber, backscattered light is generated. The power of the backscattered light depends on the mode field diameter of the optical fiber, the refractive index of a core, and the like. The larger the backscattering coefficient of the optical fiber, the higher the power of the backscattered light. Consider an optical fiber in which an optical fiber A with a large backscattering coefficient and an optical fiber B with a small backscattering coefficient are connected. When an optical time-domain reflectometer has pulsed light incident on the optical fiber A and measures returned light, the pulsed light travels from a section in which the power of backscattered light is large to a section in which the power of backscattered light is small. Therefore, the optical time-domain reflectometer measures the returned light whose power is greatly attenuated from a splice point between the optical fiber A and the optical fiber B. On the other hand, when the optical time-domain reflectometer has pulsed light incident on the optical fiber B and measures returned light, the pulsed light travels from the section in which the power of backscattered light is small to the section in which the power of backscattered light is large. Therefore, the optical time-domain reflectometer measures the returned light whose power rises from the splice point between the optical fiber B and the optical fiber A.

Thus, when the returned light of the pulsed light is measured for the optical fiber in which the optical fibers with the different backscattering coefficients are connected, a gain difference (loss difference) due to the difference in the backscattering coefficients is generated at the splice point. Therefore, to measure a splice loss at the splice point with high accuracy, it is necessary to measure a splice loss in each of a forward direction (optical fiber A to optical fiber B) and a backward direction (optical fiber B to optical fiber A), and average two measurement values of the splice loss. This method of measuring the returned light of the pulsed light in the two directions of the optical fiber and analyzing the measurement data is referred to as bidirectional analysis.

In the case of considering that bidirectional analysis is performed by an application on an information processing apparatus such as a personal computer (PC), the information processing apparatus displays two waveforms, one in a forward direction and the other in a backward direction, calculates a splice loss measured at an event at the same position in each of the forward and backward directions, and averages physical quantities such as splice losses (2 way trace analysis). When an event is detected in only one direction, the information processing apparatus calculates a splice loss calculated for that event as is. Alternatively, the information processing apparatus considers a non-existent event as an event with a splice loss of 0 dB, and calculates a splice loss averaged with a splice loss of the other event. For example, when the waveform in the forward direction is used as a reference, the information processing apparatus displays, together with the waveform in the forward direction, a pattern indicating the event for which the splice loss is averaged. By checking the synthesized splice loss for the event, a user can accurately evaluate an optical fiber to be measured.

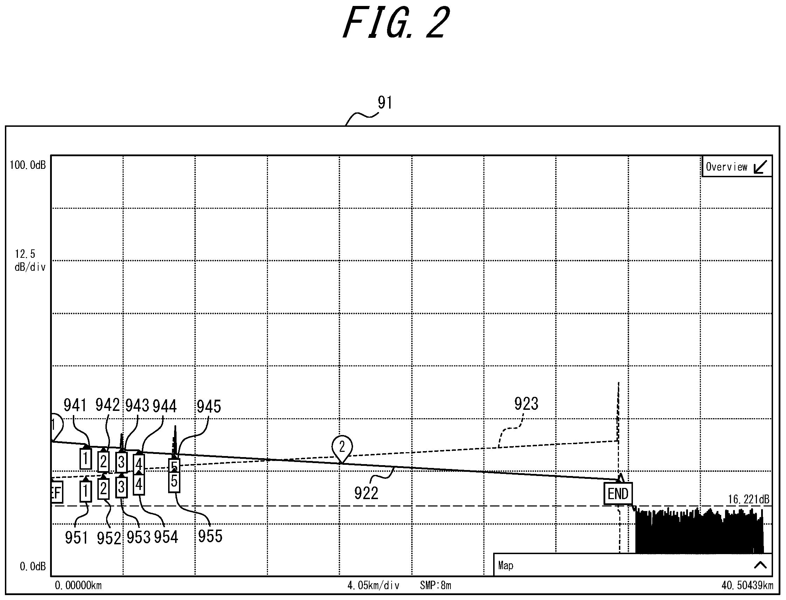

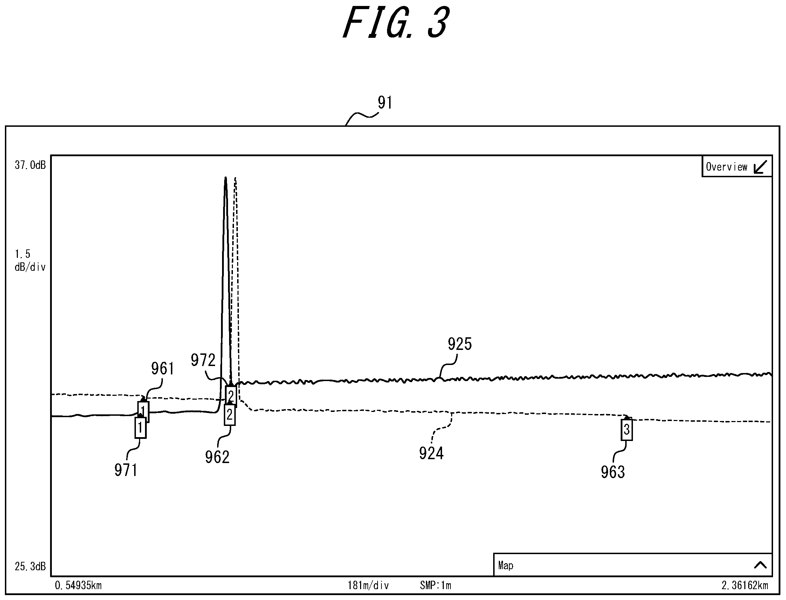

FIGS. 2 and 3 illustrate examples of waveforms when 2 way trace analysis is performed on a PC application. In an image 91 in FIG. 2, a graph 922 represents a waveform of a temporal variation of optical power of returned light of pulsed light incident forward on an optical fiber. A graph 923 represents a waveform of a temporal variation of optical power of returned light of pulsed light incident backward on the optical fiber. Patterns 941 to 945 indicate events detected from the waveform in the forward direction represented by the graph 922. Patterns 951 to 955 indicate events detected from the waveform in the backward direction represented by the graph 923. A user can identify the positions of the events in the waveforms by checking these patterns 941 to 945 and 951 to 955.

In an image 91 of FIG. 3, a graph 924 represents a waveform of a temporal variation of optical power of returned light of pulsed light incident forward on an optical fiber. A graph 925 represents a waveform of a temporal variation of optical power of returned light of pulsed light incident backward on the optical fiber. Patterns 961 to 963 indicate events detected from the waveform in the forward direction represented by the graph 924. Patterns 971 and 972 indicate events detected from the waveform in the backward direction represented by the graph 925. The user can identify the positions of the events in the waveforms by checking these patterns 961 to 963, 971, and 972.

In the example of FIG. 2, for all of the patterns 941 to 945 in the forward direction, the patterns 951 to 955 in the backward direction exist at the same positions. In contrast, in the example of FIG. 3, although the patterns 971 and 972 in the backward direction exist at the same positions as the patterns 961 and 962 in the forward direction, there is no pattern in the backward direction at the same position as the pattern 963. Since bidirectional analysis is performed on the same optical fiber, when an event is detected in only one direction, there may be a problem with measurement, analysis, or the like in a forward or backward direction. Therefore, when performing bidirectional analysis, the user may determine whether events detected by the information processing apparatus or the like are correct events, and in doing so, the user may compare waveforms in the forward and backward directions and correct the events.

Thus, when checking and correcting the events, the user may rely on directional information as to whether pulsed light is incident forward or backward. In the comparative example, all the patterns 961 to 963, 971, and 972 have the same shape. Accordingly, the user can check the absence of a pattern corresponding to the pattern 963, by looking at the pattern 963. However, it is not possible for the user to immediately determine, just by looking at the pattern 963, whether the pattern 963 is detected from the waveform of the returned light of the forward or backward pulsed light. Therefore, a configuration according to the comparative example has room for improvement from the viewpoint of displaying detected events in an easy-to-understand manner, in order to facilitate waveform analysis of optical power.

### <Embodiment>

An embodiment of the present disclosure will be described below with reference to the drawings. In the drawings, portions having the same configuration or function are denoted by the same reference numeral. In the description of the present embodiment, duplicate descriptions of the same portions may be omitted or simplified as appropriate.

A configuration according to the present embodiment clearly indicates from which directional pulsed light an event has been detected, by adding a graphical user interface (GUI) for directional information to a pattern (icon, marker) indicating the event. Specifically, the configuration according to the present embodiment adds the directional information by adding, for example, an arrow-like GUI to a pattern of an event marker on waveforms on which bidirectional analysis is performed. For an event detected only from a waveform (first waveform) of returned light of pulsed light in a forward direction (first direction), the configuration according to the present embodiment sets a pattern of an event marker like a right arrow, for example. For an event detected only from a waveform (second waveform) of returned light of pulsed light in a backward direction (second direction), the configuration according to the present embodiment sets a pattern of an event marker like a left arrow, for example. For an event detected in both directions, the configuration according to the present embodiment sets a pattern of an event marker like left and right arrows, for example. Thus, when displaying detected events, the configuration according to the present embodiment also displays travel directions of the pulsed light, so that a user can analyze the events, waveforms, and the like while easily recognizing the travel directions of the pulsed light.

In addition, the configuration according to the present embodiment highlights the patterns indicating the directions of events that are detected, at the same positions, in only one of the forward and backward directions, in a different color, shape, size, or the like from the patterns indicating the directions of events detected in both the forward and backward directions. Therefore, when performing analysis in which the waveforms in the forward and backward directions are synthesized, the user can easily distinguish the events detected in only one of the forward and backward directions from the events detected in both the forward and backward directions by simply referring to the patterns.

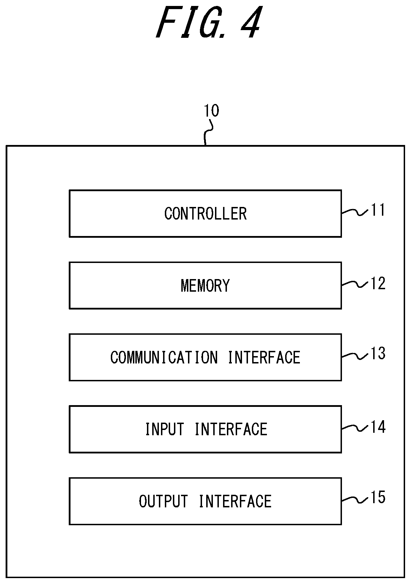

FIG. 4 is a block diagram illustrating an example of a configuration of an information processing apparatus 10 according to the embodiment. The information processing apparatus 10 is one computer apparatus or a plurality of computer apparatuses that are communicable with each other. The information processing apparatus 10 is not limited to these, but may be any general purpose electronic device, such as a PC or tablet terminal, or any other electronic device dedicated for exclusive use. As illustrated in FIG. 4, the information processing apparatus 10 includes a controller 11, a memory 12, a communication interface 13, an input interface 14, and an output interface 15.

The controller 11 includes one or more processors. In the present embodiment, "processor" is, but is not limited to, a general purpose processor or a dedicated processor specialized for particular processing. The controller 11 is communicably connected to each component of the information processing apparatus 10 and controls operations of the entire information processing apparatus 10.

The memory 12 includes, for example, any memory module such as a hard disk drive (HDD), solid state drive (SSD), read-only memory (ROM), and random access memory (RAM). The memory 12 may function as, for example, a main memory, an auxiliary memory, or a cache memory. The memory 12 stores any information used in the operations of the information processing apparatus 10. For example, the memory 12 may store system programs, application programs, various types of information received by the communication interface 13, and the like. The memory 12 may store data on waveforms of optical power measured by an optical time-domain reflectometer. The memory 12 is not limited to one built into the information processing apparatus 10, but may be an external database or an external storage module.

The communication interface 13 includes any communication module that can be connected to other devices, such as an optical time-domain reflectometer, by any communication technology. The communication interface 13 may further include a communication control module for controlling communication with the other devices and a memory module for storing communication data such as identification information required for communication with the other devices.

The input interface 14 includes one or more input interfaces that accept input operations of an operator and acquire input information based on the operations of the operator. For example, the input interface 14 includes, but is not limited to, physical keys, capacitive keys, a pointing device, a touch screen integrated with a display as the output interface 15, a microphone that accepts voice input, or the like.

The output interface 15 includes one or more output interfaces that output information to the operator, to notify the operator of the information. For example, the output interface 15 may be, but is not limited to, a display that outputs information as images, or a speaker that outputs information as audio. Such a display may be, for example, a liquid crystal panel display, an organic electro luminescence (EL) display, or the like. At least one of the input interface 14 or the output interface 15 described above may be configured as an integral part of the information processing apparatus 10, or may be provided as a separate unit.

The functions of the information processing apparatus 10 can be realized by executing a computer program (program) according to the present embodiment by a processor included in the controller 11. In other words, the functions of the information processing apparatus 10 can be realized by software. The computer program causes the computer to perform processing of steps included in the operations of the information processing apparatus 10, thereby causing the computer to realize a function corresponding to processing of each step. In other words, the computer program is a program to cause the computer to function as the information processing apparatus 10. The computer program may be recorded on a computer-readable recording medium. The program includes information for processing by an electric computer and something equivalent to the program. For example, data that is not direct commands to a computer but has the nature of prescribing computer processing falls under the category of "something equivalent to the program."

Some or all of the functions of the information processing apparatus 10 may be realized by dedicated circuitry in the controller 11. In other words, some or all of the functions of the information processing apparatus 10 may be realized by hardware. The information processing apparatus 10 may be realized by a single computer or by cooperation of multiple computers.

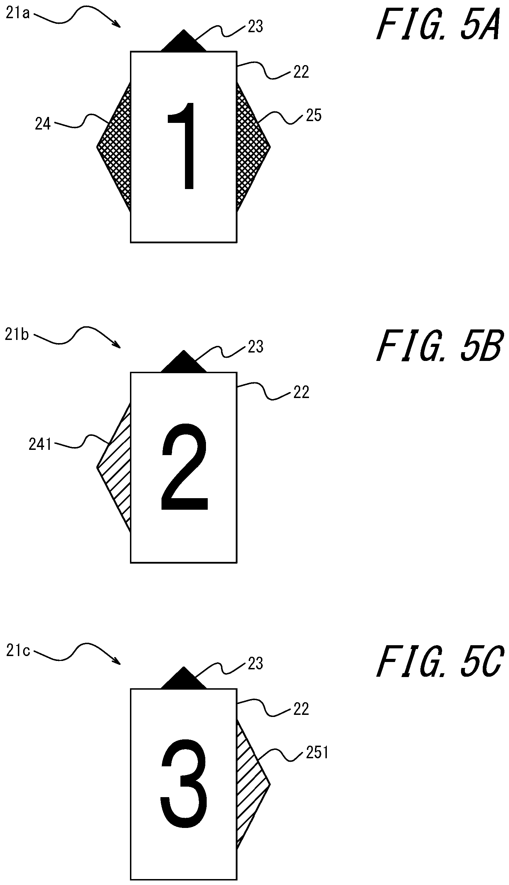

FIGS. 5A to 5C are diagrams illustrating examples of patterns 21 (21a, 21b, 21c) displayed in the present embodiment.

FIG. 5A illustrates an example of a pattern 21a indicating an event when the event is detected at the same position in waveforms in both forward and backward directions. In the example of FIG. 5A, the pattern 21a includes images 22 to 25. The image 22 indicates information to distinguish the detected event. In FIGS. 5A to 5C, events are indicated in a distinguishable manner by numerical values such as "1" to "3". Information to distinguish events is not limited to such numerical values, but may be, for example, letters or a character string.

The image 23 identifies a position at which the event has been detected. In the present embodiment, the information processing apparatus 10 outputs waveforms of optical power of returned light, with the optical power due to the returned light as a vertical axis and distance calculated from the time difference between incidence of pulsed light and return of the returned light as a horizontal axis. Therefore, in FIGS. 5A to 5C, the image 23 is in the shape of an up-pointing triangle that allows identification of a position along the horizontal axis, but the shape of the image 23 is not limited to a triangle and can be a line segment or the like. When the optical power due to the returned light is displayed on the horizontal axis and the distance is displayed on the vertical axis, the image 23 may have a shape (e.g., a side-pointing triangle) that allows identification of a position along the vertical axis.

The image 24 is an example of a pattern of an event marker that is detected based on a waveform of returned light of pulsed light incident backward. The image 25 is an example of a pattern of an event marker that is detected based on a waveform of returned light of pulsed light incident forward. In the present embodiment, the information processing apparatus 10 displays the waveforms of the returned light so that the left direction corresponds to the backward direction. Accordingly, the images 24 and 25 may be not only the left-pointing and right-pointing triangles as illustrated in FIG. 5A, but also, for example, left-pointing and right-pointing arrows, letters (e.g., "L" and "R"), character strings (e.g., "Left" and "Right"), or a combination of these.

FIG. 5B illustrates an example of a pattern 21b indicating an event when the event is detected in only the waveform in the backward direction. In the example of FIG. 5B, the pattern 21b includes images 22 and 23, and also includes an image 241 indicating the backward direction.

FIG. 5C illustrates an example of a pattern 21c indicating an event when the event is detected in only the waveform in the forward direction. In the example of FIG. 5C, the pattern 21c includes images 22 and 23, and also includes an image 251 indicating the forward direction.

Since bidirectional analysis is performed on the same optical fiber, when an event is detected in only one direction, there may be a problem with measurement, analysis, or the like in the forward or backward direction. Therefore, the information processing apparatus 10 may highlight the patterns 21b and 21c, which indicate events detected in only one direction, in a different color, shape, size, or the like from the patterns 21a, which indicate events detected in both directions. For example, the information processing apparatus 10 may highlight the images 241 and 251 indicating the directions of pulsed light in a different color, shape, size, or the like, to distinguish the images 241 and 251 from the images 24 and 25 of the pattern 5A. Alternatively, for example, the information processing apparatus 10 may highlight the entire patterns 21b and 21c, which indicate events detected in only one direction, in a different color, shape, size, or the like from the patterns 21a, which indicate events detected in both directions. In this way, by highlighting the patterns 21b and 21c, which indicate events detected in only one direction, differently from the patterns 21a, which indicate events detected in both directions, the user can easily recognize the events that require special attention.

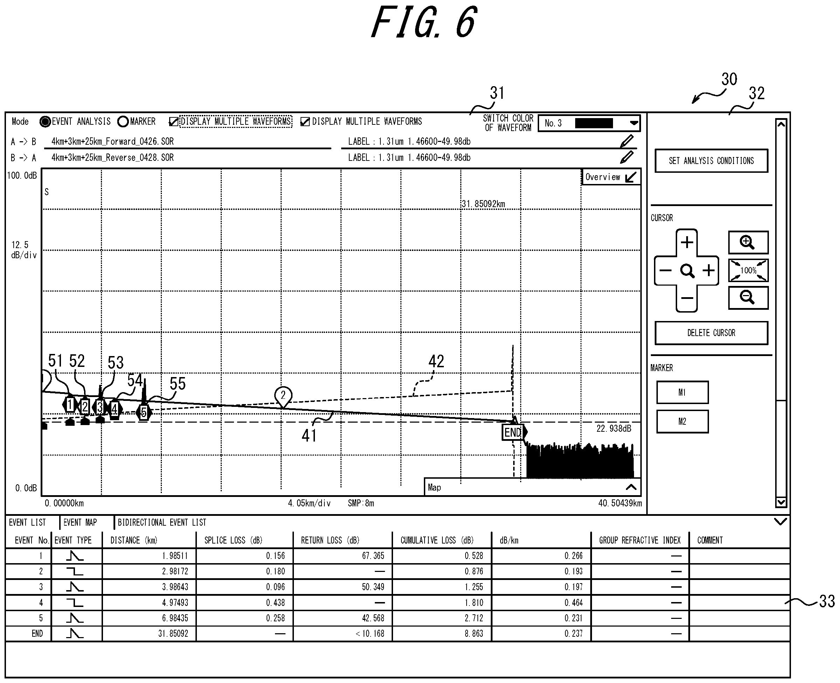

FIG. 6 is a diagram illustrating an example of an image 30 displayed on a display as the output interface 15 in FIG. 4. The image 30 includes images 31 to 33.

The image 31 displays waveforms representing temporal variations of returned light of pulsed light incident on an optical fiber. The image 31 displays graphs 41 and 42 of the waveforms of optical power of the returned light, with the optical power due to the returned light as a vertical axis and distance calculated from the time difference from incidence of the pulsed light and return of the returned light as a horizontal axis. In the example of FIG. 6, the right direction on the horizontal axis indicates a forward direction, and the left direction indicates a backward direction. The vertical axis indicates the optical power of the returned light of the pulsed light.

The image 31 also displays patterns 51 to 55 that indicate events detected in the graphs 41 and 42. In the example of FIG. 6, the patterns 51 and 53 to 55 indicate events when the events are detected at the same positions in the waveforms in both the forward and backward directions. The pattern 52 indicates an event when the event is detected in only the waveform in the backward direction. As illustrated in FIG. 6, the patterns 51 to 55 indicate not only the existence of the events, but also the travel directions of the pulsed light when the events have been detected in the waveforms of the returned light. Thus, the user can easily conduct waveform analysis while recognizing, from the patterns 51 to 55, the directions of the pulsed light. For the event that has been detected in only the waveform of the returned light of the pulsed light in one direction, the information processing apparatus 10 displays the event in a different form, such as the pattern 52, e.g., in a different color, shape, size, or the like from the other patterns 51 and 53 to 55. Thus, the user can easily recognize the event that has been detected in only the waveform of the returned light of the pulsed light in one direction, and can identify a problem and proceed analysis.

The image 32 provides a user interface that accepts operations on the graphs, events, and the like in the image 31. For example, the user interface on the image 31 includes, but is not limited to, buttons for operations of moving a cursor, zooming in, zooming out, attaching markers, and the like.

The image 33 indicates, for each event detected based on the waveforms of the returned light, physical quantities such as an event type, distance, splice loss, return loss, and cumulative loss, or characteristics. Event No. is information to identify an event and corresponds to a number in the image 22 of the pattern 21 in FIG. 5A. The event type is identified by classification of the characteristic shapes of the waveforms, but may also be identified by physical characteristics of the optical fiber inferred from the shapes of the waveforms, such as a fusion point, connector splice point, branch point, bent point, and cut point. Distance indicates a position at which the event has been detected and that is indicated by the distance (in kilometers) from an end of the optical fiber from which the pulsed light is incident. The splice loss is a splice loss (dB) measured at the position of the event. The return loss is an attenuation (dB) of the optical power measured at the position of the event. The cumulative loss is an accumulated value (dB) of losses from the end of the optical fiber from which the pulsed light is incident. The information processing apparatus 10 displays the image 33 along with the image 31, so that detailed information about each of the detected events can be viewed.

For the events (Nos. 1 and 3 to 5) that are detected by the returned light in both directions, the information processing apparatus 10 may calculate a splice loss for each event by averaging a splice loss calculated from the shape of the graph 41 and a splice loss calculated from the shape of the graph 42. For the event (No. 2) that is detected in only the returned light in the backward direction, the information processing apparatus 10 may use a splice loss calculated from the shape of the graph 42 as is, as a splice loss for that event. Alternatively, the information processing apparatus 10 may calculate, as a splice loss for that event, an average of the splice loss calculated from the shape of the graph 42 and a splice loss of 0. The information processing apparatus 10 may similarly calculate a return loss or other physical quantities, based on an average of return losses calculated based on the shapes of the graphs 41 and 42 in which the event has been detected.

The information processing apparatus 10 may also display, in the image 31, information such as the splice loss and return loss in the vicinity of the patterns 51 to 55 indicating the events. When a pointer such as a mouse pointer is positioned over the patterns 51 to 55, the information processing apparatus 10 may display the information such as the splice loss and return loss in the vicinity of the patterns 51 to 55 in the image 31, in correspondence with these patterns 51 to 55. In this way, displaying the information related to the events in the vicinity of the patterns 51 to 55 indicating the events enables the user to conduct waveform analysis further easily.

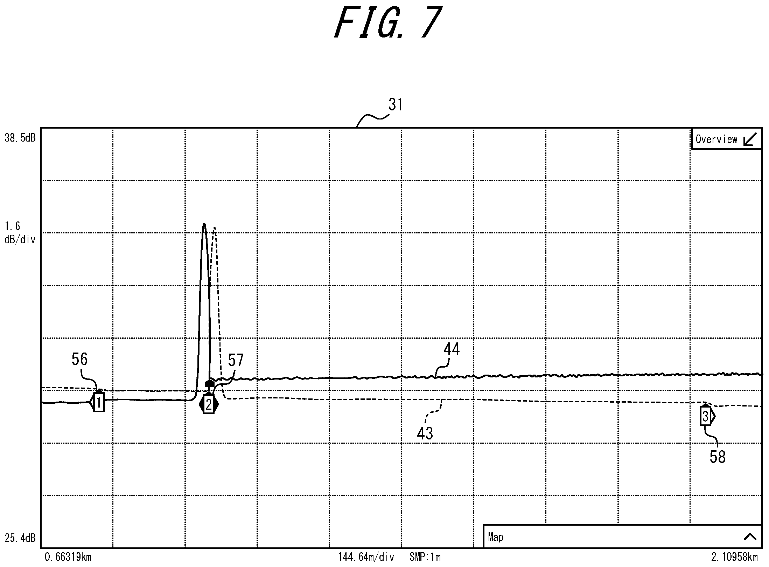

FIG. 7 is a diagram illustrating an example of displaying waveforms of returned light of pulsed light in the embodiment. In FIG. 7, an image 31 displays graphs 43 and 44, and patterns 56 to 58. The graph 43 indicates a waveform of returned light of forward pulsed light. The graph 44 indicates a waveform of returned light of backward pulsed light. The pattern 56 indicates an event when the event is detected in only the waveform in the backward direction. The pattern 57 indicates an event when the event is detected in both the waveforms in the forward and backward directions. The pattern 58 indicates an event when the event is detected in only the waveform in the forward direction. As illustrated in FIG. 7, the information processing apparatus 10 displays the directions of the pulsed light in the patterns 56 to 58 of event markers in an easy-to-understand manner. Therefore, the user can smoothly conduct bidirectional analysis.

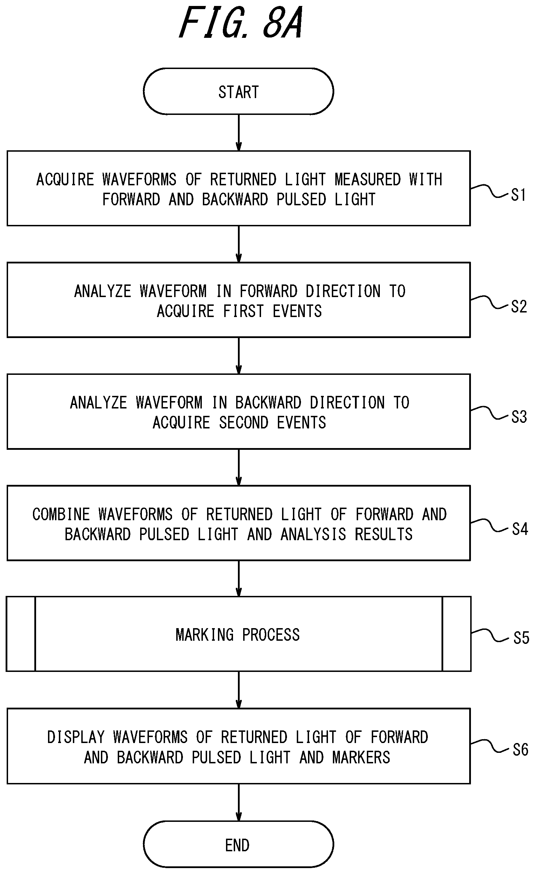

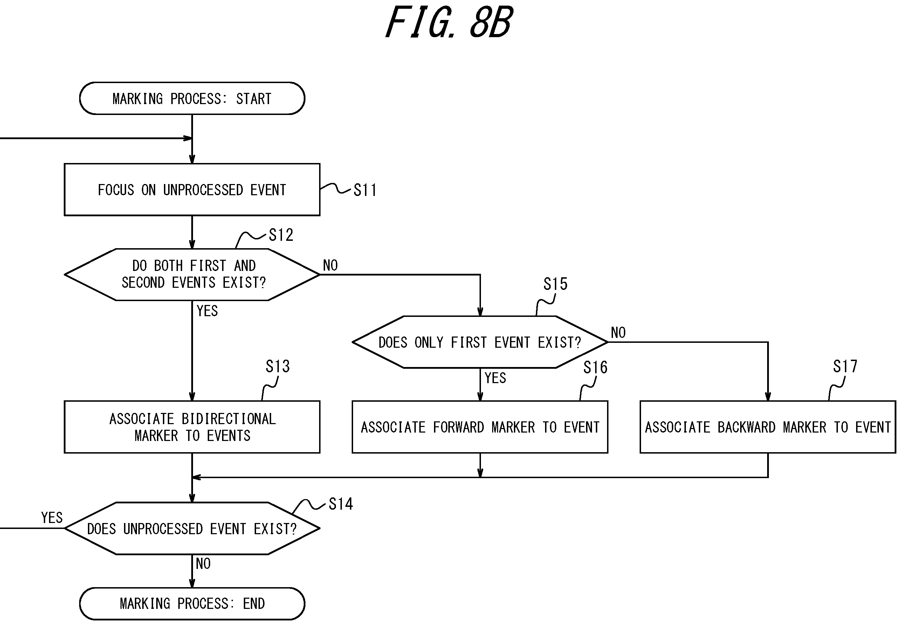

FIGS. 8A and 8B are flowcharts illustrating an example of operations of the information processing apparatus 10 according to the embodiment. The operations of the information processing apparatus 10 described with reference to FIGS. 8A and 8B may correspond to one of control methods of the information processing apparatus 10. An operation of each step in FIGS. 8A and 8B may be performed based on control by the controller 11 of the information processing apparatus 10.

In step S1, the controller 11 acquires waveforms of returned light measured with forward and backward pulsed light. Specifically, the controller 11 may receive and acquire measurement values of the waveforms of the returned light from an optical time-domain reflectometer via the communication interface 13. Alternatively, the controller 11 may acquire the measurement values of the waveforms of the returned light measured by the optical time-domain reflectometer, using a recording medium such as a universal serial bus (USB) memory. The measurement values of the waveforms of the returned light may include information indicating the correspondence between time and optical power measured at time intervals corresponding to a sampling rate, information indicating whether the measurement values are for a forward or backward direction, and the like. The following describes an example of a case in which, in step S1, the controller 11 acquires a waveform in the forward direction and a waveform in the backward direction one by one.

In step S2, the controller 11 analyzes the waveform in the forward direction, among the waveforms acquired in step S1, and acquires events detected as first events.

In step S3, the controller 11 analyzes the waveform in the backward direction, among the waveforms acquired in step S1, and acquires events detected as second events.

The memory 12 or the like of the information processing apparatus 10 stores in advance, for each type of event, information on a characteristic waveform shape according to the type of event. In steps S2 and S3, the controller 11 detects the events in the waveforms acquired in step S1 with reference to the waveform shapes stored in advance, and acquires the events as the first and second events. The controller 11 may acquire the first and second events in association with information such as the positions, splice losses, and return losses of the events. The controller 11 may calculate the splice losses, return losses, and the like based on the waveforms of the returned light in which the events have been detected.

In step S4, the controller 11 combines the waveforms of the returned light of the forward and backward pulsed light and analysis results thereof. The controller 11 may bring the positions of the waveforms in the forward and backward directions in correspondence with each other, using the information indicating whether the waveform is in the forward or backward direction, to combine the waveforms and the analysis results.

In step S5, the controller 11 performs a marking process in which patterns indicating the existence of the events are attached to the combined waveforms of the returned light. Details of the marking process are described below with reference to FIG. 8B.

In step S6, the controller 11 displays the waveforms of the returned light of the forward and backward pulsed light, to which patterns (markers) are attached by the marking process, on a display as the output interface 15. After completion of step S6, the controller 11 terminates the processes in the flowchart.

FIG. 8B is a flowchart illustrating an example of the marking process in FIG. 8A. The controller 11 executes processes of steps S12 to S17, for every detected event, with reference to the waveforms and analysis results combined in step S4 of FIG. 8A.

In step S11, the controller 11 focuses on one of unprocessed events, with reference to the waveforms and analysis results combined in step S4.

In step S12, the controller 11 determines, for the event focused on in step S11, whether both corresponding first and second events exist. Specifically, for example, when the event focused on in step S11 is an event detected in the waveform in the forward direction, the controller 11 may determine that both first and second events exist when there is an event detected in the waveform in the backward direction at the same distance (position) as the focused event. When the event focused on in step S11 is an event detected in the waveform in the backward direction, the controller 11 may determine that both first and second events exist when there is an event detected in the waveform in the forward direction at the same distance (position) as the focused event. The controller 11 may determine that both first and second events do not exist when there is no event detected in the waveform in the opposite direction at the same distance (position) as the event focused on in step S11. Upon determining that both the corresponding first and second events exist for the focused event (YES in step S 12), the controller 11 proceeds to step S13, otherwise (NO in step S12) the controller 11 proceeds to step S15.

In step S13, the controller 11 associates a bidirectional marker (e.g., the pattern 21a in FIG. 5A) to both the first and second events that are determined to exist in step S12. The controller 11 classifies both the first and second events as processed events by this process. In other words, the controller 11 classifies, as the processed events, the event focused on in step S11 and the event with the same distance (position) as the event. After completion of step S13, the controller 11 proceeds to step S14.

In step S14, the controller 11 determines whether an unprocessed event exists, with reference to the waveforms and analysis results combined in step S4 of FIG. 8A. When an unprocessed event exists (YES in step S14), the controller 11 returns to step S11, otherwise (NO in step S14) the controller 11 terminates the marking process and proceeds to step S6 in FIG. 8A.

In step S15, the controller 11 determines whether the event focused on in step S11 corresponds to the first event. When the focused event corresponds to the first event (YES in step S15), the controller 11 proceeds to step S16, otherwise (NO in step S15) the controller 11 proceeds to step S17.

In step S16, the controller 11 associates a forward marker (e.g., the pattern 21c in FIG. 5C) to the event that is determined to correspond to the first event in step S15. With this process, the controller 11 classifies the event focused on in step S11 as a processed event. After completion of step S16, the controller 11 proceeds to step S14.

In step S17, the controller 11 associates a backward marker (e.g., the pattern 21b in FIG. 5B) to the event that is determined not to correspond to the first event in step S15. With this process, the controller 11 classifies the event focused on in step S11 as a processed event. After completion of step S17, the controller 11 proceeds to step S14.

As described above, the information processing apparatus 10 acquires waveforms indicating temporal variations of returned light of pulsed light incident on an optical fiber, detects events in the optical fiber based on the acquired waveforms, and causes the waveforms and patterns indicating the detected events to be displayed on a display as the output interface 15. Here, the information processing apparatus 10 causes, as the patterns indicating the detected events, images including indications (e.g., 24 and 25 in FIG. 5A, 241 in FIG. 5B, 251 in FIG. 5C, and the like) of travel directions of the pulsed light to be displayed on the display as the output interface 15. Therefore, the user can easily check the travel directions of the waveforms in which the events have been detected.

This characteristic of being able to easily check a travel direction/travel directions of a waveform/waveforms in which an event has been detected is particularly useful in bidirectional analysis. For an event detected in only a waveform of returned light in one direction, the user needs to verify whether the event has been detected erroneously, or although the event has been detected correctly, the event has not been detected correctly in a waveform of returned light in the other direction. During such verification, the user may refer to waveforms by 2 way trace analysis to determine whether there is a false detection. Therefore, directional information on an event marker displayed in a pattern indicating the event is useful for such verification. The user can avoid the trouble of checking multiple events detected in two waveforms, one in a forward direction and the other in a backward direction. Even when displaying a waveform and an event in which there is only one direction of returned light, the information processing apparatus 10 may display an image including an indication of a travel direction of pulsed light, as a pattern indicating the event.

Since the information processing apparatus 10 indicates the directional information in the pattern of the event marker, the user can clearly determine which event exists in the forward direction, backward direction, or both directions simply by looking at the pattern during bidirectional analysis. When an incorrect event is detected in bidirectional analysis, the user may delete the event. When a correct event does not exist, the user may add the event. Making, by the information processing apparatus 10, the directional information on the event available at a glance effectively assists the user in analysis and operation.

Although the present embodiments describe an example of a configuration in which the information processing apparatus 10 displays, as a pattern indicating an event, an image including an indication of a travel direction of pulsed light, such processing may be performed by other devices. For example, a display provided in an optical time-domain reflectometer may display, as a pattern indicating an event, an image including an indication of a travel direction of pulsed light. Such a display in the optical time-domain reflectometer may be realized under the control of a program such as firmware operating in the optical time-domain reflectometer. In this way, an image including an indication of a travel direction of pulsed light may be displayed in the optical time-domain reflectometer, as a pattern indicating an event. Such an optical time-domain reflectometer makes it easier for a user to immediately find an event to be checked and inspected during bidirectional analysis at a work site, after measurement of an optical fiber in forward and backward directions by the optical time-domain reflectometer is completed.

The present disclosure is not limited to the embodiment described above. For example, multiple blocks described in the block diagram may be integrated, or one block may be divided. Multiple steps described in the flowcharts may be executed in parallel or in a different order, instead of being executed in chronological order according to the description, depending on the processing capability of the apparatus performing each step or as needed. Other changes may be made to the extent of not departing from the intent of the present disclosure.

## Claims

1. A program configured to cause a computer to operate as an information processing apparatus comprising a controller configured to:
acquire a waveform representing a temporal variation of returned light of pulsed light incident on an optical fiber;
detect, based on the waveform, an event in the optical fiber; and
cause the waveform and a pattern indicating the detected event to be displayed on a display,
wherein the controller is configured to cause, as the pattern, an image including an indication of a travel direction of the pulsed light to be displayed on the display.

2. The program according to claim 1, wherein the controller is configured to:
acquire a first waveform representing a temporal variation of returned light of pulsed light incident in a first direction on the optical fiber;
acquire a second waveform representing a temporal variation of returned light of pulsed light incident in a second direction on the optical fiber;
detect, based on the first waveform, one or more first events that are events in the optical fiber;
detect, based on the second waveform, one or more second events that are events in the optical fiber;
associate a first event detected and a second event detected at a same position as the first event with each other; and
cause the first waveform, the second waveform, a pattern indicating the first and second events associated with each other, a pattern indicating a first event that is not associated with any second event, and a pattern indicating a second event that is not associated with any first event to be displayed on the display.

3. The program according to claim 2, wherein the controller is configured to cause, as the pattern indicating the first and second events associated with each other, an image including an indication of the first and second directions to be displayed on the display.

4. The program according to claim 2 or 3, wherein the controller is configured to:
cause, as the pattern indicating the first event that is not associated with any second event, an image including an indication of the first direction to be displayed on the display; and
cause, as the pattern indicating the second event that is not associated with any first event, an image including an indication of the second direction to be displayed on the display.

5. The program according to claim 4, wherein the controller is configured to cause the image including the indication of the first direction and the image including the indication of the second direction to be highlighted and displayed on the display.

6. The program according to any one of claims 1 to 5, wherein the controller is configured to cause at least one of a physical quantity related to the event indicated by the pattern or a type of the event to be displayed in a vicinity of the pattern.

7. An optical time-domain reflectometer configured to have pulsed light incident on an optical fiber and measure a temporal variation of returned light, the optical time-domain reflectometer comprising a controller configured to:
acquire a waveform representing the temporal variation of the returned light;
detect, based on the waveform, an event in the optical fiber; and
cause the waveform and a pattern indicating the detected event to be displayed on a display,
wherein the controller is configured to cause, as the pattern, an image including an indication of a travel direction of the pulsed light to be displayed on the display.

8. The optical time-domain reflectometer according to claim 7, wherein the controller is configured to:
acquire a first waveform representing a temporal variation of returned light of pulsed light incident in a first direction on the optical fiber;
acquire a second waveform representing a temporal variation of returned light of pulsed light incident in a second direction on the optical fiber;
detect, based on the first waveform, one or more first events that are events in the optical fiber;
detect, based on the second waveform, one or more second events that are events in the optical fiber;
associate a first event detected and a second event detected at a same position as the first event with each other; and
cause the first waveform, the second waveform, a pattern indicating the first and second events associated with each other, a pattern indicating a first event that is not associated with any second event, and a pattern indicating a second event that is not associated with any first event to be displayed on the display.

9. The optical time-domain reflectometer according to claim 8, wherein the controller is configured to cause, as the pattern indicating the first and second events associated with each other, an image including an indication of the first and second directions to be displayed on the display.

10. The optical time-domain reflectometer according to claim 8 or 9, wherein the controller is configured to:
cause, as the pattern indicating the first event that is not associated with any second event, an image including an indication of the first direction to be displayed on the display; and
cause, as the pattern indicating the second event that is not associated with any first event, an image including an indication of the second direction to be displayed on the display.

11. The optical time-domain reflectometer according to claim 10, wherein the controller is configured to cause the image including the indication of the first direction and the image including the indication of the second direction to be highlighted and displayed on the display.

12. The optical time-domain reflectometer according to any one of claims 7 to 11, wherein the controller is configured to cause at least one of a physical quantity related to the event indicated by the pattern or a type of the event to be displayed in a vicinity of the pattern.

13. A program configured to cause an optical time-domain reflectometer to operate as the optical time-domain reflectometer according to any one of claims 7 to 12.
